# EUROPEAN PATENT APPLICATION

(11) **EP 4 691 722 A1**
(43) Date of publication of application: **11.02.2026**
(21) Application number: 25193822.1
(22) Date of filing: 04.08.2025
(51) Int. Cl.: B27F 1/04, B23Q 7/04, B27F 1/06, B27M 1/08

(54) **MACHINE FOR THE SIMULTANEOUS PROCESSING OF WORKPIECES AND METHOD FOR THE SIMULTANEOUS PROCESSING OF WORKPIECES WITH SAID MACHINE**

(30) Priority: 07.08.2024 IT 202400018664
(71) Applicant: Sacchi, Paride, 47924 Rimini (RN) (IT)
(72) Inventor: Sacchi, Paride, 47924 Rimini (RN) (IT)
(74) Representative: Negrini, Elena

(57) **Abstract**

A machine for the simultaneous processing of workpieces (P) comprises:
- a structure (3) comprising a working area (9);
- at least a first pair of an upper longitudinal guide (5) and a lower longitudinal guide (7), connected to the structure (3) and oriented in a longitudinal direction (X) laterally to the working area (9);
- at least a first set of upper movement members (11) and a first set of lower movement members (13), translatable independently from each other along the upper longitudinal guide (5) and the lower longitudinal guide (7), respectively, and equipped with grasp means (15), for reversibly locking and moving the workpieces (P) along the working area (9) at least in the longitudinal direction (X);
- at least one operating head (17) movable above or below the working area (9) at least in a transverse direction (Y) and/or in a vertical direction (Z) along a respective guiding means (19) connected to the structure (3), the at least one operating head (17) being provided with at least one tool (21) for processing pieces (P) carried by the upper movement members (11) and/or by the lower movement members (13);

The upper longitudinal guide (5) is placed at a higher level (Z'), along the vertical direction (Z), with respect to a lower level (Z") of the lower longitudinal guide (7).

The at least one tool (21) is capable of simultaneously working at least one upper piece (P') carried by the upper movement members (11) and at least one lower piece (P") carried by the lower movement members (13).

## Description

The present invention relates to the industrial processing of panel, strip, or beam workpieces, and specifically concerns a machine for the simultaneous processing of workpieces and a method for the simultaneous processing of workpieces with said machine.

Machines for processing workpieces are known, for example, for drilling and milling wooden panels for furniture or wooden strips or profiles for window frames. Such machines comprise a supporting structure, a working area for the pieces, grasp means for moving the pieces along the working area, and at least one operating head fixed to the working area for processing the pieces using one or more tools carried and driven by it.

A disadvantage of known machines for processing such workpieces is that the operating head can only process one piece at a time, thus limiting the overall efficiency of the machines.

Variants of known machines allow for the simultaneous processing of multiple overlapping workpieces, grasped together by the same grasp means, but only if the pieces are the same size and assigned for identical processing. Indeed, such pieces are moved as a single unit with respect to the operating head, so it is not possible to adjust the position of the individual piece with respect to the processing tool.

A disadvantage of these known machines is that they are not versatile, as they cannot simultaneously process pieces of different sizes or requiring different processing, or requiring different movements between the pieces and the tools.

An object of the present invention is to propose a machine for the simultaneous processing of workpieces in which upper movement members and lower movement members can move respective upper pieces and lower pieces along the working area independently, and therefore simultaneously, and in which one or more tools are simultaneously operated by at least one operating head, thus enabling the simultaneous processing of an upper piece and a lower piece.

Another object of the present invention is to propose a machine that, thanks to its simultaneous processing capability, offers improved efficiency compared to known machines.

A further object of the present invention is to propose a machine that allows simultaneous and different processing on the upper and lower pieces, by means of an appropriate choice of tool acting on each of them and/or by means of different handling of the upper and lower pieces.

Another object of the present invention is to propose a method for the simultaneous processing of workpieces, in which corresponding edges of an upper piece and of a lower piece can be independently aligned at respective predetermined distances from a tool and can be moved independently of the tool to simultaneously perform independent, even different, processing on the pieces.

Prior art documents EP 0302060, EP 2246165, EP 2305440 and EP 4461676 disclose a machine for the processing of workpieces.

The characteristics of the invention are highlighted below with particular reference to the attached drawings in which:
- figure 1 shows a schematic top view of the machine for the simultaneous processing of workpieces according to the present invention;
- figures 2-4 show respective schematic front views of the machine of figure 1 in a sequence of processing three edges simultaneously for an upper piece and a lower piece, where figure 4 also shows the simultaneous processing of a leading edge of an additional upper piece;
- figure 5 shows a schematic top view of a variant of the machine of figure 1;
- figure 6 shows a partial, enlarged right side view of a variant of the machine of figure 1;
- figures 7-8 show respective schematic front views of the machine of figure 1 in a sequence of processing a leading edge and a trailing edge simultaneously for an upper piece and a lower piece;
- figures 9-11 show schematic side views from the right of the machine shown in figure 5 in a sequence of simultaneous processing of the longitudinal edges of an upper piece and of a lower piece, in which some parts have been removed to better highlight others.

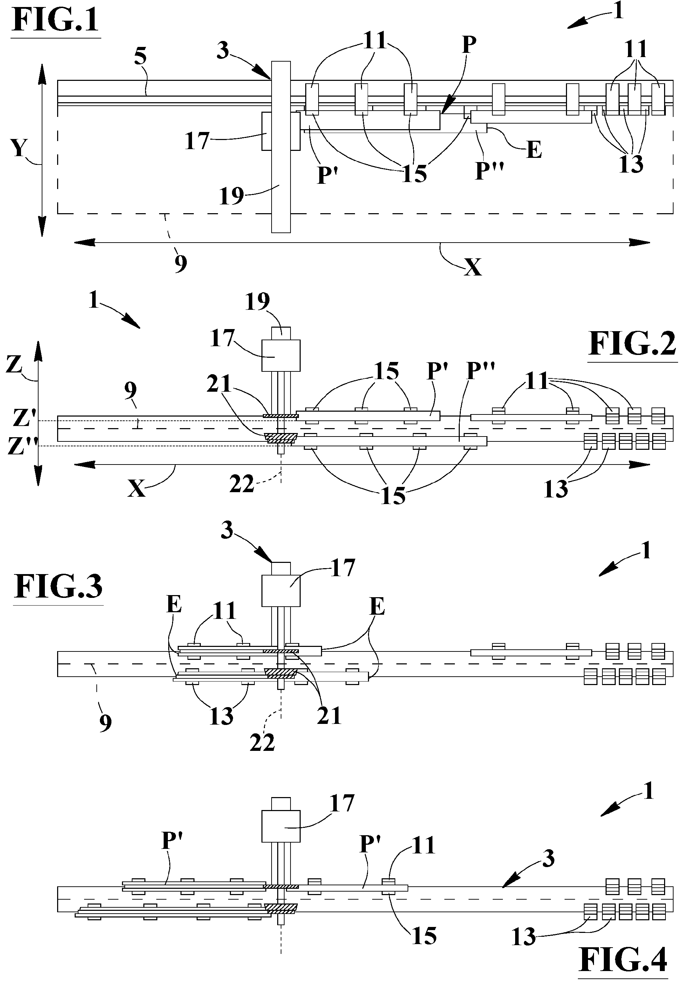

With reference to figures 1-11, numeral 1 indicates the machine for the simultaneous processing of workpieces object of the present invention.

Such pieces P are components such as strips, beams or joists, panels, boards, or other pieces preferably (but not exclusively) having a longitudinal extension, preferably made of wood but also of other materials susceptible to processing such as milling, drilling, grinding, painting, and so on. The pieces P thus processed are usually destined for carpentry or joinery uses, for example, to make furniture, beading, profiles, cladding boards, or other applications.

Machine 1 is also applicable to the processing of pieces P made of sheet metal, profiles or plates of aluminum, steel, or copper, wood, or composite materials, and more generally of any combination of pieces P and material compatible with processing performed by a working center.

In its preferred embodiment, machine 1 comprises:
- a structure 3 comprising a working area 9;
- a first pair consisting of an upper longitudinal guide 5 and a lower longitudinal guide 7, connected to the structure 3 on a longitudinal side of the working area 9and oriented in a longitudinal direction X;
- a first set of upper movement members 11 and a first set of lower movement members 13, which can be moved independently of one another along the upper longitudinal guide 5 and along the lower longitudinal guide 7 in both directions, respectively, and provided with grasp means 15 for reversible locking or clamping and movement or translation of the pieces P along the working area 9 at least in the longitudinal direction X;
- an operating head 17 movable above or below the working area 9 at least in a transverse direction Y along a respective guiding means 19 connected to the structure 3 or forming part of it, for example fixed to an arm or a fixed or movable beam of the structure 3.

The operating head 17 is provided with and operates at least one tool 21 assigned to intersect the working area 9 to perform one or more predetermined processing on the pieces P carried and moved by the upper movement members 11 and/or the lower movement members 13.

The tools 21 are typically milling bits with a profile chosen based on the desired processing, or they can be drilling bits, saws or rotating or reciprocating blades, and others, mountable on a spindle of the operating head 17. Two or more tools 21 can optionally be fixed at different heights or levels and staggered on the same shaft or hub to be operated simultaneously by a single operating head 17, as will be clear below.

Preferably, in fact, the operating head 17 is provided with and simultaneously operates at least two tools 21 associated with the same shaft and therefore rotating or rotatable around the same rotation axis 22, respectively at an higher level Z' and at a lower level Z", measured along or relative to a vertical direction Z, and capable or assigned, respectively, to simultaneously process at least one upper piece P' carried and moved along the working area 9 by the upper movement members 11 and at least one lower piece P" carried by the lower movement members 13.

Alternatively, depending on its specific configuration, a single tool 21 can act simultaneously on both the upper piece P' and the lower piece P".

Variants of the operating head 17 provide that, alternatively or in addition to movement in the transverse direction Y, it can be moved in the vertical direction Z.

In other variants, the machine 1 comprises a plurality of operating heads 17, i.e., at least two, arranged above and/or below the working area 9, and each provided with at least one respective tool 21 for processing the upper pieces P' and the lower pieces P", respectively. Multiple operating heads 17 can move along the same transverse guiding means 19; alternatively, each operating head 17 can be associated with a respective guiding means 19 or a respective side of the same guiding means 19, so that the operating heads 17 can move in the transverse direction Y to different positions and staggered along the longitudinal direction X.

Other variants of the machine 1 provide that an operating head 17 can automatically change the tool 21 to be mounted based on the specific processing required.

Furthermore, more than two tools 21 can be mounted on the same operating head 17 and aligned along the same rotation axis 22: the adjustment of the position along the vertical direction Z of the operating head 17 allows the appropriate pair of tools 21 to be brought into alignment with the upper level Z' and the lower level Z" from time to time for the execution of the respective required processing.

Optionally, each operating head 17 is provided with a stop element that intersects the working area 9 in a fixed position or with controllable actuation. The upper movement members 11 and the lower movement members 13, once the upper pieces P' and the lower pieces P" to be processed have been clamped, can preliminarily bring the edges of such pieces P', P" into contact against this stop element to allow the machine 1 to record a calibration position or "offset" of each movement member 11, 13 on the basis of which it can calculate all subsequent commands and positioning of the movement members 11, 13 themselves.

The structure 3 acts as a load-bearing structure or frame, and comprises at least one longitudinal beam that carries the first pair of upper longitudinal guides 5 and lower longitudinal guides 7 and that delimits the working area 9 on one side, which corresponds to the geometric surface along which the pieces P can be moved or, more properly, to the geometric volume, of reduced thickness compared to the other two dimensions, within which the pieces P translate. The longitudinal beam carrying the first pair of longitudinal guides 5, 7 is preferably fixed, but variants of the machine 1 provide for it to be movable in the transverse direction Y, for example, to accommodate particularly bulky pieces P in the working area 9, or to move in a mirror-like manner with an opposite movable longitudinal beam, as will be better explained below.

The upper longitudinal guide 5 and the lower longitudinal guide 7 each comprise a bar, or rail, or rack, or belt, or screw, or similar, and are fixed horizontally to the structure 3, for example to said longitudinal beam, with the upper longitudinal guide 5 positioned at the higher level Z', i.e. higher, along the vertical direction Z, than the lower level Z" at which the lower longitudinal guide 7 is positioned.

The upper movement members 11 and the lower movement members 13 are slidably constrained along the longitudinal guides 5, 7 by respective carriages 12, individually driven by respective motor elements, having for example a gear wheel coupled to a rack of the longitudinal guide 5, 7 or associated in parallel with it, so that each movement member 11, 13 can translate between adjacent movement members 11, 13 (or between an adjacent movement member 11, 13 and an end of the respective longitudinal guide 5, 7) freely and individually, independently of the others.

The grasp means 15 of each movement member 11, 13 is preferably of the clamp type, comprising a lower jaw and an upper jaw. At least one of the two jaws, typically the upper jaw, can be actuated for clamping and releasing by a respective clamping actuator, while the lower jaw is typically not actuated and is fixed with respect to the respective upper movement member 11 or lower movement member 13, and preferably positioned at the higher level Z' or at the lower level Z", respectively. The jaws may optionally be provided with a rubber sole of another non-slip material to improve the grip on the pieces P without damaging them. Naturally, a grasp means 15 of this type can simultaneously clamp multiple overlapping pieces P for simultaneous processing, depending on the dimensions of these and of the grasp means 15. Alternatively, the grasp means 15 are, for example, of the suction cup or so-called "vacuum" type.

A variant of the grasp means 15 provides that the lower jaw can also be operated for clamping and, above all, for opening, allowing the grasping of pieces P that, due to incorrect positioning during their delivery or loading onto the machine 1, or due to a curvature, as is often the case with wood or composite panels, are initially below the predefined level Z', Z".

Preferably, each grasp means 15 of the upper movement members 11 and of the lower movement members 13 is also movable in at least one between the transverse direction Y and the vertical direction Z, or in a combination thereof, with respect to the respective upper longitudinal guide 5 or lower longitudinal guide 7. Such actuation is carried out by means of a respective transverse actuator, i.e. horizontal and/or vertical, acting between the grasp means 15 and the respective carriage 12. The transverse actuator, for example, is of the worm screw type, hydraulic, pneumatic or other similar.

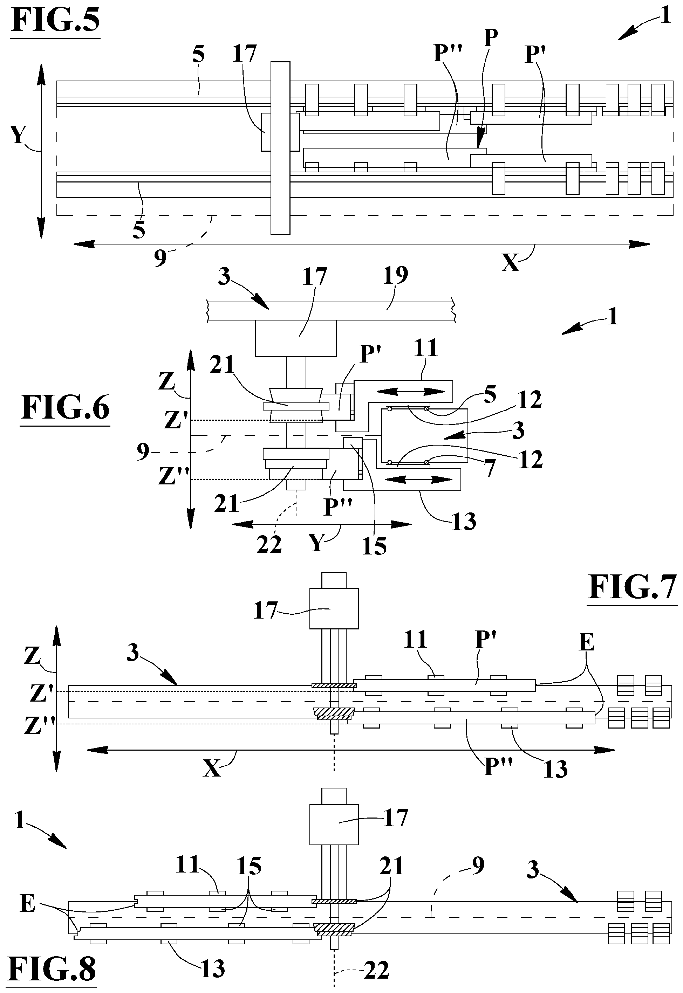

The upper longitudinal guide 5 and the lower longitudinal guide 7 can be fixed to the upper and lower sides of the respective longitudinal beam, respectively, as exemplified in figure 6. In this case, both the upper movement members 11 and the lower movement members 13 are preferably also movable at least horizontally in the transverse direction Y.

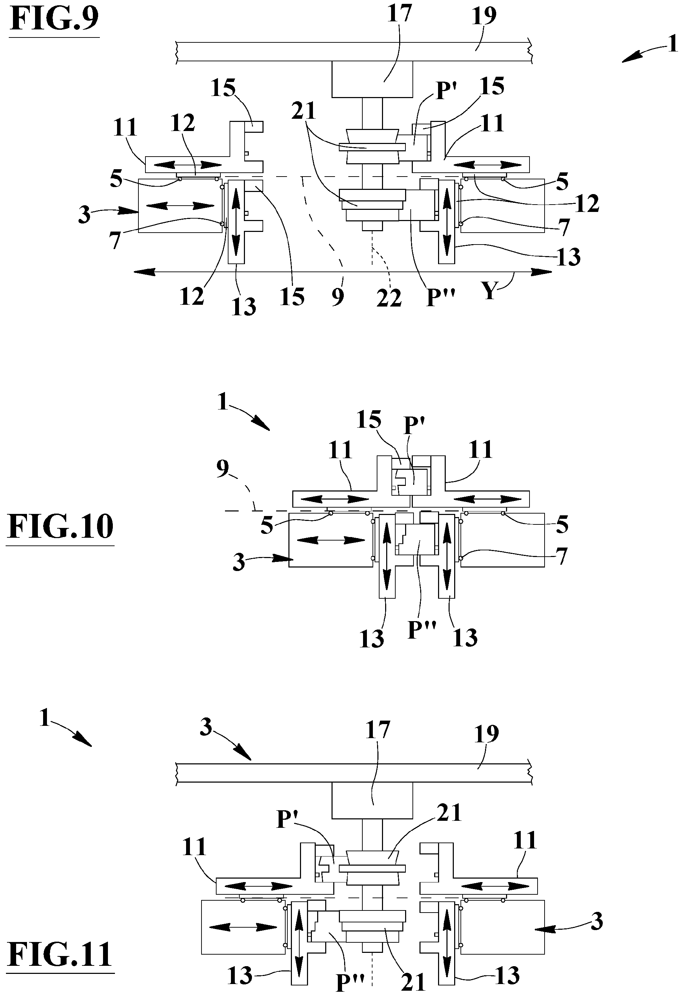

In a variant, illustrated for example in figure 9, the upper longitudinal guide 5 and the lower longitudinal guide 7 are fixed to the upper and vertical sides adjacent to the working area 9 of the longitudinal beam, respectively, almost orthogonal to each other. In this case, preferably, the upper movement members 11 can also be operated horizontally and perpendicularly to the upper longitudinal guide 5, while the lower movement members 13 can also be moved in the vertical direction Z with respect to the lower longitudinal guide 7.

Incidentally, the actuation range of the lower movement members 13 can be sufficiently extended so that, if necessary, the respective grasp means 15 can translate the pieces P along the working area 9 to the higher level Z' of the upper movement members 11: in this way, the two sets of upper movement members 11 and lower movement members 13 can cooperate for the continuous translation of the pieces P along a single plane and to a single higher level Z', with the lower movement members 13 retracting from such higher level Z' at least at the intersection with the movements of the upper movement members 11 to avoid interfering with the latter, and providing the possibility of a translation and continuous processing of the pieces P at the tool 21. Furthermore, for particularly large or thin pieces P, it is possible for a piece P to be simultaneously grasped and moved by a subset of the upper movement members 11 and by a subset of the lower movement members 13, which will move in parallel for the entire duration of the processing of such piece P until the latter is released once it has been processed.

This specific arrangement and mobility of the movement members 11, 13 is also particularly advantageous in that it makes the design, construction and wiring of the machine 1 easier in practice: for example, in this way the upper horizontal longitudinal guides 5 and the lower vertical longitudinal guides 7, with their respective rails and/or racks, can be more conveniently accessible for maintenance than if these guides were fixed to opposite and almost parallel sides of the longitudinal beam.

A similar variant is also provided in which the lower movement members 13 are slidably constrained to a lower longitudinal guide 7 fixed to the lower side of the longitudinal beam of the structure 3 and can also be operated in the transverse direction Y, while the upper movement members 11 are constrained to an upper longitudinal guide 5 fixed laterally to such beam and can be operated vertically, possibly up to the lower level Z".

In another embodiment, illustrated for example in figure 5, the machine 1 also comprises a second pair of an upper longitudinal guide 5 and a lower longitudinal guide 7, which are connected to the structure 3 in the longitudinal direction X on one side of the working area 9 opposite to the first pair of upper longitudinal guide 5 and lower longitudinal guide 7.

The structure 3 comprises, for example, a longitudinal beam that supports said second pair of longitudinal guides 5, 7, mirrored with respect to the longitudinal beam supporting the first pair of upper longitudinal guide 5 and lower longitudinal guide 7. As for the first pair of guides, also in the second pair the upper longitudinal guide 5 is positioned at a higher level Z' with respect to the lower level Z" at which the lower longitudinal guide 7 is positioned.

The upper longitudinal guide 5 and the lower longitudinal guide 7 of said second pair of guides carry respective second sets of upper movement members 11 and lower movement members 13, respectively, which are slidably constrained to them and can be moved independently of each other.

An optional variant of this embodiment of machine 1 provides that the upper longitudinal guide 5 and the lower longitudinal guide 7 of the second pair of guides are movable at least in the transverse direction Y, being able to move inward within the working area 9, outward outside the working area 9 (possibly widening the latter at least temporarily), or in both directions, by means of respective actuators. For example, the longitudinal beam of structure 3, to which the second pair of longitudinal guides 5, 7 are fixed, is attached to a carriage that slides along respective rails perpendicular to the longitudinal direction X.

Machine 1 also comprises programmable digital electronic control means (PLC), which numerically control the electrical and electronic components of machine 1, as is normally the case in a machining centre. These control means are capable of at least controlling the translation of each movement member 11, 13, the movements and actuations of the operating heads 17, and the possible actuation, alignment, or movement of the movable longitudinal guides 5, 7 of the second pair; furthermore, the control devices can know the exact position of each movement member 11, 13 at any time, by means of deterministic calculations or even by means of position sensors associated with each movement member 11, 13.

The movements of the movement members 11, 13, the opening and clasping of the grasp means 15, the actuation of the operating heads 17, and the alignment of any movable longitudinal beams are controlled to ensure very precise positioning of the pieces P and of the processing performed on them.

The supply of the pieces P to be processed to the machine 1, and therefore to its movement members 11, 13, and the removal or collection of the processed pieces P by machine 1, can be performed manually by an operator of machine 1, or can be performed automatically by a suitably programmed robotic arm. The supply of the pieces P occurs at an entry point of the working area 9, and the removal of the processed pieces P occurs at an exit point of the working area 9, where said entry and exit points may possibly coincide.

Object of the present invention is also a method for the simultaneous processing of pieces P using the machine 1 for the simultaneous processing of pieces P just described, or using any machine or machining centre provided with independent sets of upper movement members 11 and lower movement members 13 and of at least one tool 21 capable of simultaneously processing the upper pieces P' and lower pieces P" clamped and moved by them.

In the preferred embodiment, the method of the invention comprises the steps of:
- grasping or clamping an upper piece P' using an upper movement member 11 of a first set of upper movement members 11, which can be operated by sliding in the longitudinal direction X along a respective upper longitudinal guide 5 at a higher level Z';
- grasping or clamping a lower piece P" using a lower movement member 13 of a first set of lower movement members 13, which can be operated by sliding along a respective lower longitudinal guide 7 at a lower level Z" with respect to the higher level Z';
- aligning in the longitudinal direction X an edge E of the upper piece P' and an edge E of the lower piece P" with respect to at least one tool 21 along a working area 9 of the machine 1;
- processing said edges using the at least one tool 21, where the processing of said edges E of the upper piece P' and of the lower piece P" is performed simultaneously by the at least one tool 21, i.e., for example, via a single so-called descent.

The upper pieces P' and the lower pieces P" may each be of equal or different dimensions. The processing component in the longitudinal direction X is determined independently by the translation in the longitudinal direction X of the at least one upper movement member 11 for the upper piece P' and by the translation in the longitudinal direction X of the at least one lower movement member 13 for the lower piece P", being the upper movement members 11 controlled independently of each other and independently of the lower movement members 13, which in turn are independently movable.

Such edge E preferably consists of the leading or trailing edge, or so-called header, of a piece P to be processed, for example, the leading edges of two upper panels P' and lower panels P" to be milled to create a joint.

The alignment step is performed for each edge E with respect to the tool 21 assigned for its processing: consequently, depending for example on the type of tool 21 and the depth of the processing to be performed on each piece P, it is possible that the edges E of the upper piece P' and the lower piece P" are vertically perfectly aligned, or that the alignment involves a certain predetermined stagger or offset between the two.

The alignment step can also be performed exclusively in the transverse direction Y, if the upper movement members 11 and/or the lower movement members 13 allow this type of adjustment as already described, depending on the size of the pieces P', P" and the processing to be performed on them: this allows, among other things, the processing of the corners of the leading and trailing edges E in particular. The transverse component of this processing is determined alternatively (or jointly) by adjusting the transverse position of the operating head 17 carrying the tool 21, i.e., by adjusting the rotation axis 22 of the tool 21, and/or by the transverse position of the grasp means 15 of the upper movement members 11 and/or lower movement members 13.

The tool 21 may be a single tool capable of simultaneously processing the upper pieces P' and the lower pieces P", or, as already mentioned, a single operating head 17 or operating heads 17 may carry and operate multiple tools 21, each capable of processing the upper pieces P' and the lower pieces P" respectively.

Naturally, also depending on the dimensions of the pieces P, each upper piece P' can be grasped by multiple upper movement members 11, which will then rigidly translate along the upper guide 5, and each lower piece P" can be grasped by multiple lower movement members 13, which will then translate parallel along the lower guide 7.

The edge E to be processed may also consist of a first longitudinal edge of the pieces P. In this case, the method also involves the following steps:
- aligning in a transverse direction Y a first longitudinal edge of the upper piece P' and a first longitudinal edge of the lower piece P" with respect to the at least one tool 21;
- moving the upper piece P' and the lower piece P" in the longitudinal direction X for the simultaneous processing of said first longitudinal edges by the at least one tool 21.

In this way, a piece P of the beam, bar, or strip type can be milled, for example, according to a certain longitudinal profile using a milling head tool 21, where the milling depth is determined alternatively (or jointly) by adjusting the transverse position of the operating head 17 carrying the tool 21 and/or by the transverse position of the grasp means 15 of the upper movement members 11 and/or the lower movement members 13, or by the mutual alignment between the upper piece P' and the lower piece P" and the at least one tool 21.

Depending on the width or transverse dimension of the upper piece P' and the lower piece P" and the required processing, the alignment in the transverse direction Y can consist of a perfect vertical alignment or an alignment with a predetermined offset.

It is clear that in this way, the first longitudinal edges of the upper piece P' and of the lower piece P" can be processed simultaneously, opposite second longitudinal edges of the same pieces facing the movement members 11, 13 for clamping the pieces by means of the grasp means 15.

Preferably, the method involves repeating the aligning and processing steps for one or more different edges E of the upper piece P' and/or of the lower piece P", for example, first aligning and processing the leading edges E of the pieces P', P" and then the trailing edges E of the pieces P', P" themselves. Between two consecutive repetitions of the aligning and translating steps, the at least one tool 21 is preferably moved in the transverse direction Y and/or in the vertical direction Z outside the working area 9 or in any case outside the translation trajectory of the pieces P', P", so as not to interfere with the upper piece P' and the lower piece P" during their movements along the working area 9. This means that, once an upper piece P' and a lower piece P" have been grasped, the following operations can be performed in succession, for example:
- alignment in the longitudinal direction X of a leading edge E of the upper piece P' and of the lower piece P" at the at least one tool 21, with any related predetermined deviations, and related processing of said edges E, where the longitudinal component of the processing is determined by the translation of the upper movement members 11 and of the lower movement members 13 and the transverse and vertical component of the processing is preferably determined by corresponding movements of the operating head 17 and of the tools 21;
- displacement of the at least one tool 21 outside the working area 9 or the trajectory of the pieces P', P";
- translation, by means of the upper movement members 11 and of the lower movement members 13, of the upper piece P' and the lower piece P" along the working area 9;
- repositioning of the at least one tool 21, and alignment in the longitudinal directions X of a trailing edge E of the upper piece P' and of the lower piece P" at the at least one tool 21, with subsequent processing;
- displacement of the at least one tool 21 in the transverse direction Y;
- alignment in the transverse direction Y of the upper piece P' and of the lower piece P", and processing a longitudinal edge E of such pieces by translating them in the longitudinal direction X by the upper movement members 11 and the lower movement members 13.

Naturally, the alignment and processing of the trailing edges E and the longitudinal edges E can be reversed without any substantial change.

As previously mentioned, if the processing involves a transverse and/or vertical component, the processing component in the transverse direction Y and/or vertical direction Z is preferably determined by the movements, in the transverse direction Y and/or vertical direction Z, respectively, of grasp means 15 of the upper movement members 11 and of the lower movement members 13, and/or of at least one operating head 17 carrying the at least one tool 21.

If it is necessary to also process the second longitudinal edges of the pieces P', P" previously clamped by the grasp means 15, and therefore previously unmachinable by the at least one tool 21, a variant of the method also involves the following steps:
- grasping the upper piece P' using at least one upper movement member 11 of a second set of upper movement members 11;
- grasping the lower piece P" using at least one lower movement member 13 of a second set of lower movement members 13;
- aligning in the transverse direction Y a second longitudinal edge of the upper piece P' and a second longitudinal edge of the lower piece P", opposite to the respective first longitudinal edges, with respect to the at least one tool 21;
- translating in the longitudinal direction X the upper piece P' and the lower piece P" for the simultaneous processing of said second longitudinal edges by the at least one tool 21.

This variant, obviously, is only feasible if the machine 1 or another machine is provided with second sets of upper movement members 11 and of lower movement members 13 which, as already described, are on one side of the working area 9 opposite to the corresponding first sets. Preferably, such second sets can move closer to the inside or further away from the outside of the working area 9 with respect to the first sets of movement members 11, 13, by means of movements in the longitudinal direction X of the single movement members 11, 13 or grasp means 15, and/or by means of the displacement of the second pair of upper longitudinal guide 5 and lower longitudinal guide 7 to which the second movement members are slidably constrained.

Even with a single operating head 17 driving one or more identical, coaxial, and vertically aligned tools 21 along the same rotation axis 22, and therefore rotating in the same manner, it is clear that using a method and machine 1 as described, it is possible to simultaneously perform on an upper piece P' and on a lower piece P":
- the same processing, if the relative movements of the upper movement members 11 carrying the upper piece P' and the lower movement members 13 carrying the lower piece P" with respect to the tools 21 are parallel and therefore identical;
- different processing, if the upper movement members 11 carrying the upper piece P' are driven differently from the lower movement members 13 carrying the lower piece P".

Even with only the first pair of upper longitudinal guide 5 and lower longitudinal guide 7, it is possible to perform almost any type of processing on all six sides of each piece P', P", including the longitudinal edge of these grasped by the grasp means 15, using suitable tools 21. The sequence of grasping, alignment, processing, and translation operations can also be determined by software running on the machine 1 control means based on an optimization calculation.

The advantages provided by using the described method for the simultaneous processing of pieces P are better illustrated by the following examples of implementation, presented here for non-exhaustive and non-limiting purposes.

### Example 1

Referring to figure 6 as an example, an upper piece P' and a lower piece P" are grasped by the grasp means 15 and moved respectively by upper movement members 11 and lower movement members 13 of the type provided with grasp means 15 that move at least in the transverse direction Y.

These pieces P', P" are aligned in the transverse direction Y each at a predefined distance from the rotation axis 22 of the respective tool 21, where the two tools 21 are coaxial and driven by the same operating head 17.

The pieces P', P" are then translated in the longitudinal direction X for the simultaneous processing of their (first) longitudinal edges opposite the edges grasped by the grasp means 15, to create for example a profile defined by the shape or cross-section of each of the tools 21. Such a processing is illustrated, for example, in the sequence of figures 2 and 3.

Note that, since the two tools 21 are coaxial and since the distance between each edge to be processed and the respective tool 21 is different, the different alignment of the upper piece P' and of the lower piece P" is necessarily permitted and determined by the possibility of adjusting the position in the transverse direction Y of the grasp means 15 of the upper movement members 11 and/or lower movement members 13 with respect to the corresponding carriages 12 constrained to the upper longitudinal guide 5 and to the lower longitudinal guide 7. Otherwise, simultaneous processing of the upper piece P' and of the lower piece P" would only be possible if these, as well as the specific processing to be performed on each, were identical.

### Example 2

With reference to the sequence illustrated in figures 7 and 8, an upper piece P' and a lower piece P" are initially grasped and aligned in the longitudinal direction X so that the leading edge E of each is at a predetermined distance from a respective tool 21 or, more precisely, from the rotation axis 22 of the latter.

If necessary, the vertical position of the tools 21 is adjusted by moving the operating head 17 in the vertical direction Z so that each is at the correct higher level Z' or lower level Z".

The head of each piece P', P" is then processed simultaneously by translation in the longitudinal direction X, operated by the upper movement members 11 and the lower movement members 13 and which determines the longitudinal component of the processing, and/or by movement in the transverse direction Y of the operating head 17 with the respective tools 21, preferably, and/or by transverse movement of the grasp means 15, determining the transverse component of the processing.

Subsequently, the operating head 17 is displaced so that the tools 21 do not interfere with the translation of the pieces P', P" in the longitudinal direction X.

The upper piece P' and the lower piece P" are translated along the working area 9, the tools 21 are repositioned, and the pieces P', P" are realigned with respect to them with their trailing edges E.

The processing is then repeated on the trailing edges E.

### Example 3

In an initial stage of loading or supplying pieces P onto machine 1, a plurality of upper pieces P' and lower pieces P" are provided for each to be picked up by a respective upper movement member 11 or lower movement member 13, so that the aligning, processing, and/or translation steps are repeated almost continuously, minimizing or even eliminating the waiting time between processing the trailing edge E of one piece P', P" and the leading edge E of the next piece P', P".

In fact, it is possible that while the trailing edge E of a pair of pieces P', P" is processed by one or more tools 21 longitudinally downstream of these, the same tools 21 process the leading edge E of a subsequent pair of pieces P', P" from the upstream side: in this way, processing is not only simultaneous between an upper piece P' and a lower piece P", but it is also simultaneous between previous and subsequent pieces placed at the same level Z', Z", further increasing the productivity of machine 1.

Obviously, the trailing edges E can be aligned at different distances from the rotation axis 22 compared to the leading edges E, to ensure that the processing depth is always appropriate.

The maximum limit on the number of pieces that can be clamped simultaneously by the movement members 11, 13 is determined by their overall length, which must be less than the longitudinal dimension between the entrance to the working area 9 and the operating head 17, and by the number of movement members 11, 13 themselves.

### Example 4

Similarly to the previous example, it is possible to supply machine 1 with a single strip, bar, or beam clamped by the upper movement members 11, and a similar component clamped by the lower movement members 13.

Prior to the actual processing at the tool 21, another tool 21 of the blade or saw type, mounted on a different operating head 17 positioned longitudinally upstream from the other, performs several descents to cut the upper component and the lower component into a corresponding number of upper pieces P' and lower pieces P", each supported by at least one respective upper movement member 11 or lower movement member 13. As the pieces are cut, they are moved forward along the working area 9 for processing by the appropriate tool 21, as already described in Example 3. Alternatively, a single operating head 17 can automatically replace the tool 21 from time to time, for example by alternating a blade and a drill or milling cutter.

Again, the limit on the maximum length of the starting strip is imposed only by the number of movement members 11, 13 and by the longitudinal distance available between the entrance to the working area 9 and the second operating head 17 that performs the actual processing.

It is optionally possible for the starting strip to be longer than this longitudinal distance, whereby a trailing portion of such strip initially remains outside the working area 9 and is gradually recalled at the entrance of the latter.

### Example 5

Referring specifically to the sequence illustrated in figures 9, 10, and 11, a machine 1 is provided with a first set and a second set of upper movement members 11, and with a first set and a second set of lower movement members 13. The first sets are slidably constrained to a respective upper longitudinal guide 5 and a respective lower longitudinal guide 7 fixed to a first fixed longitudinal crossbar of the structure 3, and the second sets are fixed to a longitudinal crossbar of the structure 3 on the opposite side of the working area 9 and movable along the latter in the transverse direction Y (as indicated by the double horizontal arrows in the aforementioned figures).

After processing the first longitudinal edges of the upper piece P' and of the lower piece P", the operating head 17 and the respective tools 21 are temporarily moved and disengaged from the working area 9 (for example, by moving the operating head 17 upward). The movable beam is moved along the working area 9 towards the fixed beam, for example by sliding on respective rails (not shown), so that the upper movement members 11 and the lower movement members 13 of the second sets can reach and clamp the upper piece P' and the lower piece P" with their grasp means 15 on the side of the already processed longitudinal edges of the latter.

The movable beam is then moved away from the fixed beam so that the operating head 17 can return the tools 21 to the working area 9.

The second sets of movement members 11, 13 align the second longitudinal edges, still to be processed, of the upper piece P' and the lower piece P" with respect to the tools 21, which perform the required processing thanks to the longitudinal translation of the pieces themselves by means of said movement members 11, 13.

### Example 6

Combining some of the operating sequences of machine 1 and the method exemplified above, a robotic arm or other automatic machinery is also intended to lower to one end of the working area 9, delivering an upper piece P' and a lower piece P" to be processed by the longitudinally downstream upper movement members 11 and lower movement members 13, respectively. More specifically, for example, the robot is programmed to deliver new pieces P', P" to be processed to the movement members 11, 13 of the second sets of movement members 11, 13.

These movement members 11, 13 translate in the transverse direction Y to approach the movement members 11, 13 of the first sets, transferring the pieces P', P" to the latter.

The two pieces P', P" are translated and aligned towards an operating head 17 for the processing of their respective leading edges E, then the operating head 17 (after possibly replacing the tools 21) moves transversely and the pieces P', P" are further translated for the processing of their first longitudinal edges.

Meanwhile, the subsequent free movement members 11, 13 of the first sets in turn receive further pieces P', P" from the movement members 11, 13 of the second sets, which in turn were previously supplied with new additional pieces P', P" by the robotic arm, and translate them towards the operating head 17.

Once the processing of the first longitudinal edges of the first pieces P', P" is completed, the operating head 17 (again, after a possible change of tools 21) approaches the first pair of upper guide 5 and lower guide 7 again, processing the trailing edge E of the first pieces P', P" and possibly simultaneously processing the leading edge E of the second pieces P', P", previously aligned with respect to the tools 21, provided that the processing on the leading and trailing edges can be performed using the same tool 21. Otherwise, the operating head 17 can alternatively be moved vertically to carry a different tool 21 at the predetermined level Z', Z" for the different sequential processing of the leading edge and the trailing edge, or the operating head 17 can automatically replace tool 21 from time to time.

The first pieces P', P" are then transferred to movement members 11, 13 of the second sets, as already illustrated, for the processing of the second longitudinal edges or other processing, while the second pieces P', P" advance longitudinally for the processing of their respective first longitudinal edges.

Once the processing of the second longitudinal edges is complete, the first pieces P', P" are returned to the said end of the working area 9, carried by the second sets of movement members 11, 13. Here the robotic arm picks up the processed pieces P', P" and, immediately thereafter, supplies the same newly released movement members 11, 13 with new pieces P', P" to be processed.

It is therefore convenient to repeat this operation in an essentially cyclical manner. This cycle allows for the supply of pieces P, simultaneous processing, and removal of the processed pieces P by the same robotic arm in the same area of the working area 9, which is extremely productive and efficient overall, maximizing the operating time or duty cycle of the tools 21.

### Example 7

Machine 1 and the simultaneous processing method described also allow for processing such as milling or curved cuts on pieces P.

To perform curved cuts along the horizontal plane of pieces P, it is possible, for example, to keep the tools 21 fixed. The upper movement members 11 and the lower movement members 13, moving along their respective upper guide 5 and lower guide 7, provide the longitudinal component of the processing, while the transverse actuation of the grasp means 15 of the same movement members 11, 13 provides the transverse component.

The interpolation of the two types of movements causes a curvilinear movement of the pieces P relative to the tools 21, and consequently produces the desired curved processing.

Parallel actuations of the upper movement members 11 and of the lower movement members 13, and their respective grasp means 15, result in identical curved processing. However, since the upper movement members 11 and the lower movement members 13 are completely independent, they can be actuated differently to achieve different interpolations and perform different processing between the upper pieces P' and the lower pieces P", while still advantageously maintaining simultaneity between such processing.

Similarly, the interpolation between the movement of the pieces P horizontally along the working area 9 by the movement members 11, 13 and the vertical actuation of the tools 21 via the movement of the operating head 17 allows for processing, including curved ones, on the upper face and on the lower face of each piece P.

### Example 8

If only one longitudinal edge of the pieces P is to be processed, and if the milling to be performed on such edge can only be performed by a tool 21 other than the tool 21 suitable for processing the leading and trailing edges E of the pieces P themselves, it is possible that the pieces P, carried by the movement members 11, 13 of the first sets, are initially aligned by a first tool 21 for the processing of their leading and trailing edges E. The same pieces P are then transferred to the second sets of movement members 11, 13 for the processing of the longitudinal edge, or for any other compatible processing, by the tool 21 assigned for this purpose.

## Claims

1. Machine for the simultaneous processing of workpieces (P) comprising:
- a structure (3) comprising a working area (9);
- at least a first pair of an upper longitudinal guide (5) and a lower longitudinal guide (7), connected to the structure (3) and oriented in a longitudinal direction (X) laterally to the working area (9);
- at least a first set of upper movement members (11) and a first set of lower movement members (13), translatable independently from each other along the upper longitudinal guide (5) and the lower longitudinal guide (7), respectively, and equipped with grasp means (15), for reversibly locking and moving the workpieces (P) along the working area (9) at least in the longitudinal direction (X);
- at least one operating head (17) movable above or below the working area (9) at least in a transverse direction (Y) and/or in a vertical direction (Z) along a respective guiding means (19) connected to the structure (3), the at least one operating head (17) being provided with at least one tool (21) for processing pieces (P) carried by the upper movement members (11) and/or by the lower movement members (13);
the machine (1) being **characterized in that** the upper longitudinal guide (5) is placed at a higher level (Z'), along the vertical direction (Z), with respect to a lower level (Z") of the lower longitudinal guide (7), and **in that** it comprises two or more tools (21) fixed at different heights or levels of a same shaft or hub in order to be actuated at the same time by the same operating head (17) and rotated around a same rotation axis (22), at the at a higher level (Z') and at the lower level (Z") to simultaneously processing at least one upper piece (P') carried by the upper movement members (11) and at least one lower piece (P") carried by the lower movement members (13).

2. Machine according to claim 1 **characterized in that** each grasp means (15) of the upper movement members (11) and/or the lower movement members (13) is also movable in at least one between the transverse direction (Y) and the vertical direction (Z) with respect to the respective upper (5) or lower (7) longitudinal guide by means of a respective transverse actuator.

3. Machine according to claim 1 or 2 **characterized in that** it further comprises a second pair of upper (5) and lower (7) longitudinal guides, connected to the structure (3) in the longitudinal direction (X) on a side of the working area (9) opposite to the first pair of upper (5) and lower (7) longitudinal guides, the upper (5) and lower (7) longitudinal guides of said second pair being provided with respective second sets of upper movement members (11) and lower movement members (13), and being positioned at a higher level (Z") and a lower level (Z"), respectively.

4. Machine according to claim 3 **characterized in that** the upper (5) and lower (7) longitudinal guides of the second pair are movable at least in the transverse direction (Y) within and/or outside the working area (9) by means of respective actuator means.

5. Machine according to any one of the preceding claims **characterized in that** it comprises at least two operating heads (17), one above and the other below the working area (9).

6. Method for the simultaneous processing of workpieces by means of the machine for the simultaneous processing of workpieces of any one of the preceding claims, comprising the steps of:
- grasping an upper workpiece (P') by means of at least one upper movement member (11) of a first set of upper movement members (11);
- grasping a lower workpiece (P") by means of at least one lower movement member (13) of a first set of lower movement members (13);
- aligning in a longitudinal direction (X) and/or in a transverse direction (Y) an edge of the upper workpiece (P') and an edge of the lower workpiece (P") with respect to at least one tool (21);
- processing said edges by means of the at least one tool (21);
the method being **characterized in that** the processing of said edges of the upper piece (P') and of the lower piece (P") is performed simultaneously by two tools (21) fixed at different heights or levels of a same shaft or hub in order to be actuated at the same time by the same operating head (17) wherein the component of the processing in the longitudinal direction (X) is determined independently by the translation in the longitudinal direction (X) of the at least one upper movement member (11) for the upper piece (P') and by the translation in the longitudinal direction (X) of the at least one lower movement member (13) for the lower piece (P'').

7. Method according to claim 6 **characterized by** repeating the steps of aligning and processing for one or more different edges of the upper piece (P') and/or the lower piece (P'').

8. Method according to claim 6 or 7 **characterized in that** it further comprises the steps of:
- aligning in a transverse direction (Y) a first longitudinal edge of the upper piece (P') and a first longitudinal edge of the lower piece (P") with respect to the at least one tool (21);
- moving the upper piece (P') and the lower piece (P") in the longitudinal direction (X) for processing said first longitudinal edges by means of the at least one tool (21).

9. Method according to any one of claims 6 to 8 **characterized in that** it further comprises the steps of:
- grasping the upper piece (P') by means of at least one upper movement member (11) of a second set of upper movement members (11);
- grasping the lower piece (P") by means of at least one lower movement member (13) of a second set of lower movement members (13);
- aligning in the transverse direction (Y) a second longitudinal edge of the upper piece (P') and a second longitudinal edge of the lower piece (P''), opposite to the respective first longitudinal edges, with respect to the at least one tool (21);
- moving the upper piece (P') and the lower piece (P") in the longitudinal direction (X) for processing said second longitudinal edges by means of the at least one tool (21).

10. Method according to any one of claims 6 to 9 **characterized in that** the component of the processing in the transverse direction (Y) and/or in the vertical direction (Z) is determined by the movements, respectively in the transverse direction (Y) and/or in the vertical direction (Z), of grasp means (15) of the upper movement members (11) and of the lower movement members (13), and/or of at least one operating head (17) carrying the at least one tool (21).
